# EUROPEAN PATENT SPECIFICATION

(11) **EP 3 920 706 B1**
(45) Date of publication and mention of the grant of the patent: **31.12.2025**
(21) Application number: 20705481.8
(22) Date of filing: 05.02.2020
(51) Int. Cl.: A21B 3/13

(54) **CONTAINERS FOR BAKING**
BEHÄLTER ZUM BACKEN
RÉCIPIENTS DE CUISSON AU FOUR

(30) Priority: 05.02.2019 GB 201901600
(43) Date of publication of application: 15.12.2021
(73) Proprietor: Dutton, Beverley Andrea, Farnham Surrey GU9 8BB (GB)
(72) Inventor: Dutton, Beverley Andrea, Farnham Surrey GU9 8BB (GB)
(74) Representative: Stevens Hewlett & Perkins
(86) International application number: PCT/GB2020/050264
(87) International publication number: WO 2020/161491

(56) References cited:
- WO-A1-2006/066349
- CN-U- 204 742 379
- DE-A1- 3 025 373
- DE-B1- 2 815 417
- DE-C2- 2 815 417
- FR-A5- 2 058 939
- JP-A- 2000 025 737
- US-A- 1 336 292

## Description

This invention relates to containers for baking and, more particularly, to such containers which can be supplied in flat pack form and then readily assembled by the end user. The containers can be used to make deep vertically sided cakes, such as birthday, Christmas and wedding cakes, in a variety of shapes including numerals and other novelty shapes; as well as bread and other baked products.

Historically, most breads, pies and cakes were baked on flat surfaces. The initial attempts to bake in a contained form were made using strong pastry; when flour was in short supply because of the Napoleonic blockades, ceramic containers were made to emulate the shape and look of the pies. Wooden frames were also often used.

With the advent of readily available tin plate in the late 1700s, it became increasingly popular to bake breads and cakes in containers made from this material whereby a flat sheet of tin coated iron or steel would be bent to form the required shape. This happened to the extent that baking containers are, even now, generally referred to as "baking tins" regardless of the material from which they are fabricated. As sheet metal forging/stamping technology improved, some baking tins were developed from single piece stampings although the constraints of stamping technology result in a style of tin with sloping sides and pronounced rounded corners.

In recent years, the range of materials used to fabricate containers for baking has been extended to include anodised aluminium, silicon and mild steel with various coatings; often with non-stick properties, such as Teflon, as an alternative to a tin coating. Additionally, some cakes and breads are now baked in disposable containers - most notably, the cupcake case (a crimped coated paper case usually about 80mm in diameter). This latter type of container has been extended commercially to include other "baked in" products. These baking containers are usually fabricated in coated paper or lightweight card in the shape of an extended oval form of a cupcake case and have sloping sides. However, these disposable forms of cake "tin" are generally limited in size, not stable during the baking process and require a frame, specialised tray or outer tin to hold them stable during the baking process. Currently, tin plated steel, silicon, anodised aluminium, greaseproof paper and certain applied coatings are regarded as suitable from a food contact safety perspective.

Various types of baking tins and other baking containers have evolved to meet different requirements. In this respect, a key consideration will often be whether they are intended for constant/regular use in a commercial bakery operation or for much less frequent use by an individual baking at home.

Tin plated steel baking tins have traditionally been made largely by hand and are available in a wide variety of shapes. Before the advent of large plant commercial bakery factories, bakers relied extensively on this style of cake tin. This type of tin is still widely used by home bakers and the resurgence of specialist craft bakers where access to a wide range of cake tin styles and shapes offers the opportunity to bake bespoke or personalised cakes. As there is a large component of hand working in the construction of these tins, they are usually the most expensive type of baking tins.

Tin plated steel baking tins can be made in a wide range of shapes, which is an advantage to the home and craft baker seeking to produce cakes in shapes, styles and designs that are not available from the supermarkets. Furthermore, they can be constructed to bake a deep cake (e.g. with a depth of around 8cm) which is often necessary in order to create traditional celebration cakes such as Christmas, birthday and wedding cakes. However, these tins also have some significant disadvantages. In particular, they are expensive due to the fabrication method and small production runs, are not easy to clean and can deteriorate if frequently washed in a dish washer, and they are comparatively heavy. Furthermore, for the craft baker and domestic baker wishing to offer a wide range of cake shapes the storage requirements can be extensive. Temperature control during baking is critical due to the rapid heat conduction properties of the tin plated steel. In some instances, bakers are advised to add layers of paper to the outside of the tin during baking to aid the even distribution of heat during the baking process. Proprietary versions are also available to wrap around a tin.

Fabricated anodised aluminium tins are available in various sizes, but in ranges more limited than those of the tin plated steel tins. This is largely due to fabrication techniques that require more investment and some limitations of the material. Such tins are generally regarded as not suitable for regular commercial use. While they have the advantage of being lightweight, fabricated anodised aluminium tins have a number of disadvantages. In particular, limited shape ranges with consequent restricted application for producing novelty shaped cakes and traditional cakes such as Christmas, birthday and wedding cakes; and the anodised surface can be easily mechanically damaged and scratched, and renders the tins unsuitable for cleaning in a dish washer. Furthermore, the pricing is at the higher end of tin pricing which can be viewed as a disadvantage when factoring in the limited potential life span if used frequently.

Pressed and cast aluminium tins (novelty tins) with anodised surface or Teflon type coatings are widely available but are very limited in their applications as they usually only offer one shape, e.g. a Christmas tree or car. While they have the advantage of being lightweight, pressed and cast aluminium tins have some disadvantages. In particular, they have very restricted application, the anodised or coated surface can be easily mechanically damaged and scratched, and the anodised surfaces are unsuitable for cleaning in a dish washer. Furthermore, the pricing is at the higher end of tin pricing which can be viewed as a disadvantage when factoring in the limited use opportunities and limited life span if used frequently.

Pressed steel tins are used widely in both commercial and private circumstances, mainly for regular production items but across limited shape ranges. They have several advantages. In particular, they are widely available, moderately priced and the sloping sides to these tins improve the ease with which the baked product can be released from the tin. This has resulted in them being extensively used for commercial bread baking. However, they also have some disadvantages. In particular, the pressing process limits the tin shape to having sides that slope and this makes them generally unsuitable for baking traditional straight-sided cakes such as Christmas, birthday and wedding cakes, they are available in limited ranges due to production tooling costs, and they are often coated with a non-stick surface of limited durability.

Silicon rubber tins (moulds) made by injection moulding have been available for a few years. While they have the advantages of being comparatively lightweight and easily cleaned, they have the disadvantages of being comparably expensive due to the price of silicon and production tooling costs, available in limited ranges and only made for smaller cakes due to the limited stability of the silicon rubber.

Disposable paper baking containers and light card liners are usually made with greaseproof papers; the most common forms being the cupcake and muffin cases, which can also come in an extended form and are used for baking small bread loaves and loaf cakes. Using perimeter crimping or folding to form the sides, these are used to line metal tins from which they gain support during cooking. In many instances the cooked content will be sold to the consumer in the case which, subject to the specification of the material used, can be decoratively printed. The advantages of these containers are that the contents are not in contact with the supporting metal tin or tray which therefore requires little cleaning, the case can remain with the cupcake and be used to decoratively increase the appeal of the cupcake, and the case can make handling and storing the cupcake/loaf cake more efficient. However, there are some disadvantages. In particular, the case liners require support during the baking process, are one time only use, and they do not have much intrinsic strength and are limited to small cakes. The nature of the crimped sides and/or the requirement to make them stackable results in sloping sides, thus making them generally unsuitable for baking traditional deep, straight-sided cakes such as Christmas, birthday and wedding cakes.

Corrugated cardboard baking trays are generally made from single sided corrugation, one side smooth and one side corrugated, or double sided with smooth surfaces on both sides of a corrugated core. The inner surface is treated to permit food contact and together with the cardboard designed to resist temperatures up to 200°C. These trays predominantly come in two formats, pre-assembled small trays designed to nest prior to use and larger shallow flat pack (tray bake) trays that require assembly by the baker. The main advantage of these trays is that they are cost effective for some types of product and commercial production techniques. However, they have a number of disadvantages. In particular, the pre-assembled trays are generally small due to the limited stability of the cardboard construction, are designed with sloping sides to permit nesting prior to use and they are therefore generally unsuitable for baking traditional deep, straight-sided cakes such as Christmas, birthday and wedding cakes, and are not available for baking larger cakes due to the stability limitations of the cardboard construction.

The large self-assembly trays are predominantly of a shallow nature due to the limitations of the design of the current cardboard construction and are generally designed for products known as tray bakes. Tray bakes are generally less than 40mm deep and are cut into individual portions once baked, as would be common when baking brownies. The limitations of the construction render the trays unsuitable for baking traditional large, deep, straight-sided cakes such as would be the norm for classic celebration cakes for Christmas, birthdays and weddings.

In the case of both pre-assembled and self-assembly trays, the construction is made with corrugated cardboard pre-coated or laminated with materials such as polyethylene terephthalate (PET). These sheets are then cut to the desired shape for pre-assembly or self-assembly. In both instances, the design of the assembly can result in the exposure of cut edges in the corrugated cardboard which are unprotected by a food safe barrier and can lead to these edges being exposed to the cake mix during the baking process. This can also result in the fats/oils in the cake batter mix entering the body of the cardboard and which will in some instances render it unsuitable for re-cycling/composting. In addition, the use of plastic/polymer film coatings excludes the possibility of the card from being recycled or composted.

It is an object of the present invention to provide containers for baking which can be supplied in flat pack (also referred to herein as fold-flat) form and then readily assembled by the end user. They are made from or are coated with a material which is safe for contact with food. The containers preferably can be used to make deep vertically sided cakes, such as birthday, Christmas and wedding cakes, in a variety of shapes including numerals and other novelty shapes; as well as bread and other baked products. Relevant prior art may be found in documents WO 2006/066349 A1, DE 28 15 417 B1 and CN 204 742 379 U.

Further objects and advantages of this invention are described below.

According to a first embodiment of the present invention there is provided an ovenable fold-flat baking container assemblable from a flat unassembled form into an assembled form, the container comprising a flat base and at least one side wall member, wherein:
the base comprises a main base portion and one or more base flaps which are hingedly connected to the main base portion, the or each base flap being foldable about its hinge connection between a first inactive position, in the unassembled form, in which the flap is substantially co-planar with the main base portion and a second active position, in the assembled form, in which it overlies the main base portion;
the or each side wall member has a main wall portion and which has along its bottom edge one or more tabs, each of said tabs being capable of folding outwards relative to the main wall portion;
such that, when the main wall portion of the side wall has its bottom edge in contact with the main base portion with the tabs folded outwards, and one or more base flaps are folded into an active position, the tabs are sandwiched between the base flaps and the main base portion with the main wall portion upstanding from the main base portion;
retaining means being provided to secure the one or more base flaps in their active position, such that the main base portion and the one or more main wall portions form an open-topped enclosed cavity.

Preferably, the hinge connection for the or each base flap is defined by one or a combination of: i) a crease, ii) a pair of spaced creases or iii) an alternative type of line or lines of weakness. The particular form of each hinge can be varied according to the shape of the container and, in some cases, a hinge defined by a single crease or fold may be appropriate. In a particularly preferred embodiment, the hinge is in the form of a pair of spaced creases (or other lines of weakness) which is reduced to a single crease (or other line of weakness) at one or more points along its length.

The baking containers of the first embodiment of this invention comprise a base and at least one side wall. The base is formed as a flat panel. In use, the coated side of the corrugated cardboard, or other suitable material, will face upwards so that it comes into contact with the food that is to be baked in the container. The base preferably has one or more lines of weakness, such as a crease or pre-scored line, which assist, facilitate or permit one or more parts of the base to be folded inwards so as to create one or more flaps which overlie the base. The outer edge of each flap will have a contour that follows the shape of the cake or other food product that is to be baked in the container concerned.

In a preferred embodiment, the lines of weakness are in pairs separated by a small distance, typically from 3mm to 8mm, so that when the part of the base concerned is folded inwards the flap thereby created has a hinge thickness which corresponds to the distance between the lines of weakness. If desired, the distance between the pairs of creases or other lines of weakness may vary, for example in a shallow arc or curve, along the length of the base flap so that the resulting flap has a hinge of varying thickness.

In a particularly preferred embodiment, when the lines of weakness are in pairs, and in order to ensure that the action of folding a flap creates two folds that are at 90 degrees (or approximately 90 degrees) to one another - which is important for ensuring that the retaining means for securing the flap to the base is correctly aligned - the double lines of weakness (for example, spaced creases) are interrupted by being reduced to a single line of weakness (for example, a crease) at one or more points along their length. Typically, the single line of weakness will be positioned centrally between the two lines of weakness (so that it runs in line with and is midway between the two fold lines). For example, in a double fold line that is between 200 and 350mm long there would typically be two sections with a single line of weakness, each of about 25 to 30mm in length, respectively spaced at distances approximately one quarter and three quarters along its length. It will be understood that the number of sections with a single line of weakness may be increased (for example, on longer double fold lines) or decreased to one (for example, on shorter double fold lines), and their length and spacing may be varied.

The flap or flaps can then be secured to the underlying base. A preferred means for doing so is a hinged push through tab in the base which, when in the engaged (locked) position, extends from the base through a corresponding aligned aperture in the overlying flap (or vice versa, namely a push through tab in the flap that extends through a corresponding aligned aperture in the underlying base). A plurality of such push through tabs may be provided. It is envisaged that other means for retaining or securing the flaps in the folded position may alternatively or additionally be employed.

The side wall of the container is formed from one or more panels. Typically, each panel will be about 85mm in height. All or some of the side wall panels may have vertical creases or pre-scored lines in them to assist in forming them into the desired shape when the container is assembled, for example to produce a side wall with a smooth curve or arc when the container is for baking a round or heart-shaped cake. In use, the coated side of the corrugated cardboard, or other suitable material, will face inwards so that it comes into contact with the food that is to be baked in the container.

The side wall has along its bottom edge one or more tabs, each of those tabs being capable of folding outwards. The tabs may be provided all along the bottom edge or spaced at intervals along its length. To facilitate this outward folding of the tabs, each tab is preferably defined by a line of weakness such as a crease or pre-scored line. Typically, each of the tabs will be about 15mm long; but they could be of varying lengths according to the design of the product to be baked in the container concerned. Where the overall side wall is formed from more than one panel, these will be connected together end to end in a secure manner when the container is assembled. In this regard, the panels may be provided with an end flange or other extension so that they can be fastened together, outside of the cavity within which the cake or other food product will be baked. A preferred fastening means is a hinged push through tab which, when in the engaged (locked) position, extends from the flange or other extension on one panel through a corresponding aligned aperture in the other panel. A plurality of such push through tabs may be provided. It is envisaged that other means for securing the side wall panels together may alternatively or additionally be employed.

The baking container side walls of this first embodiment may also have an outwardly foldable upper return or flange which, in assembled form, extends in a direction away from the cavity. This will be utilised to provide extra support/rigidity on longer straight sides and typically may be between 15 and 25mm in width.

When assembling the container for baking of this first embodiment of the invention, the tabs along the bottom edge of the panel or panels that constitute the side wall are folded outwards. The one or more parts of the base with lines of weakness are then folded inwards so as to create one or more flaps which overlie the base. The tabs are placed in the space between the one or more flaps and the underlying base, and the flap or flaps are then secured to the base so that the side wall is held in position. This allows the side wall to register and define the desired shape for the cavity in the container within which the cake or other food product will be baked. According to the invention, the inwardly facing edge of the base flap or of each base flap is shaped such that, when the main wall portion of the side wall has its bottom edge in contact with the main portion of the base with the tabs folded outwards relative to the main wall portion, the one or more base flaps are folded into an active position, and the tabs are sandwiched between the base flaps and the main portion of the base, the inwardly facing edges of the base flap or flaps form a substantially continuous abutment with the side wall and so maintain the correct positioning of the side wall.

As explained above, the means for securing a flap to the underlying base, with the tabs along the bottom of the side wall inserted between the flap and the base, is by the use of hinged push through tabs which, when in the engaged (locked) position, extend from the base through a corresponding aligned aperture in the overlying flap (or vice versa). This is also the preferred means for securing side wall panels together. Preferably, the push through tab has a bulbous shoulder or mushroom shape adjacent to the hinge. A significant advantage of using the push through tab is that it can easily be reversed (i.e. unlocked) so as to allow the removal of the cake or other food product from the container once it has been baked.

In the aforementioned embodiment where the areas on the base that are to be folded inwards to create flaps are defined by pairs of lines of weakness, the distance between the lines in a pair of lines of weakness (and thus the thickness of the hinge of the resulting flap) can vary to both create a stronger edge to the base when folded over and an increased closing pressure between the base and the over fold (flap) at the point where the tabs at the bottom of the side wall are inserted (once the push through tabs have been engaged so as to secure the flap to the underlying base). Additionally, by using lines of weakness arranged in non-parallel pairs an increased closing pressure can be created in the intervals between the push through tabs. This has benefits where the shape of the design of the baking container permits only limited opportunities to deploy the push through tabs in the fold over (flap) areas. In the particularly preferred embodiment referred to above, the hinge is in the form of a pair of spaced creases (or other lines of weakness) which is reduced to a single crease (or other line of weakness) at one or more points along its length. This has the significant advantage of ensuring that the action of folding a flap creates two folds that are at 90 degrees (or approximately 90 degrees) to one another - which is important for ensuring that the retaining means for securing the flap to the base is correctly aligned.

The design of the container of the first embodiment of the present invention, ensures that the correct surface of the suitably coated corrugated cardboard, or other heat resistant material from which the container is made, is presented to the cake mix or other food product during the baking process. Furthermore, the means employed to secure the side walls to the base, and to secure the panels of the side wall together, do not permit leakage of the cake mix or other food product during the early stages of cooking (before the cake batter or other food product solidifies) and also avoids the cake mix or other food product being significantly exposed to cut edges in the corrugated cardboard.

According to an embodiment that does not form part of the invention, there is provided an ovenable, fold-flat baking container assemblable from a flat unassembled form into an assembled form, the container comprising a flat base and at least three side wall portions wherein:
each side wall portion is hingedly attached to the base along a straight base fold line such that the side wall portion can be folded inwardly so as to be generally perpendicular to the base with the base fold lines forming a continuous folded edge and the side wall portions forming with the base an open-topped cavity when in said assembled form;
an outwardly foldable gusset section being provided between the ends of adjacent side wall portions, each gusset section comprising a pair of gusset portions each hingedly connected to one of the adjacent side walls, the hinge connection of each gusset portion with its associated side wall portion being an outward fold extending perpendicular to the hinge connection of the associated side wall portion to the base; and
retention means being provided to retain together the gusset portions of each gusset section in contact with each other in a position external to said cavity such that the container retains its assembled form with the side walls upstanding from the base. Preferably, each pair of gusset portions is hingedly connected to each other with an inward fold.

Preferably, the retention means comprises one or a combination of: i) foldable flaps or tabs (for example, a combination of a long tab, a short tab and corner tabs) or ii) hinged push through tabs. It is envisaged that other means for retaining or securing the flaps in the folded position may alternatively or additionally be employed.

According to the embodiment that does not form part of the invention, for designs of a purely rectilinear nature (for example, square or oblong baking containers) with corners at or close to 90 degrees, the formation of the corner of the tin is made using shapes being part of the body of the initially flat sheet of corrugated cardboard from which the cut-out is formed. The cut-out has a series of integrated flaps and creased fold lines that enable the corner to be created through folding and deploying the flaps/tabs to lock the corner into position. Alternatively, separate locking tabs can be used (for example, hinged push through tabs of the type described above for the first embodiment of the invention). The design of the corner prevents any cake mix being exposed to the non-treated side of the corrugated cardboard and also locks in position rim folds/flanges necessary to provide stability to long-sided cake tins. If desired, different side wall panels can be joined with hinged push through tabs (for example, of the type described above for the first embodiment of the invention). It will be understood that baking containers in other shapes, such as triangles or pentangles, can also be made according to the second embodiment of the invention.

The baking container side walls of this embodiment may also have an outwardly foldable upper return or flange which, in assembled form, extends in a direction away from the cavity. This will be utilised to provide extra support/rigidity on longer straight sides and typically may be between 15 and 25mm in width.

The containers of this invention enable cakes and other products to be baked in a wide range and variety of shapes and sizes. While containers of the first embodiment can be used to make cakes in any shape, including designs that are round or have curved edges (such as in the shape of a heart, or the numerals 0 and 8) or novelty shapes (such as a Christmas tree), the containers of the unclaimed embodiment are best suited to making cakes and other baked products in substantially rectilinear shapes (typically, square, oblong or triangular shapes).

It will be appreciated that the first embodiment and the unclaimed embodiment of this invention may be used separately or, where required in order to produce a baking container of a particular (perhaps irregular novelty) shape with stable side walls, they may be used in combination.

The containers of the first and the unclaimed embodiments of this invention need to be made of a material (or coated with a material) that is ovenable and, more specifically, heat resistant to the temperatures at which the food products placed within them are to be baked.

While the containers of the two embodiments can be made with various cardboards, they are preferably made of a corrugated cardboard. This is typically from 0.8 to 1.0mm thick and which, under the grading system for corrugated cardboard, would therefore be designated as an 'F' flute. It will be appreciated that the corrugated cardboard can be thinner for a baking container that has a smaller cavity, or thicker for containers with larger cavities. Indeed, the card thickness may be varied within one container in order to meet the desired structural requirements to achieve suitable stability during its use.

The construction of the corrugated cardboard will generally consist of three layers with, in some instances, an addition of a coating or lamination on the third inner layer. In the instance where an F flute is being used, the outer layer will typically be virgin kraft paper with a weight of 110gms. The corrugate (middle) layer will also typically be a virgin kraft paper and typically have a weight of 110gms. The third layer may be a virgin kraft paper with a subsequent layer or coating or be a greaseproof or vegetable parchment paper or the third layer may be substituted with either greaseproof paper or parchment paper, typically with a weight of 60gsm. The resistance to heated grease and fats of greaseproof and parchment papers is measured as the KIT value. For baking this will need to be a value of at least 9. The greaseproof paper or parchment paper may also be treated with silicon. Where a food contact heat resistant coating or lamination is required this can also be provided using a plastic film such as PET. Typically, these corrugated card constructions can be designed to suit baking temperatures up to 220°C.

The invention provides containers with a variety of cavity shapes within which, for example, cakes and breads can be baked. The containers of this invention are suitable for the stable construction and baking of large/deep format cakes with vertical sides (typically up to 90mm deep) in a range of shapes, thereby enabling the creation of decorative celebration cakes that are traditionally used for Christmas, birthday and wedding cakes. The invention provides a cost effective solution for those that, perhaps because they only make cakes on an occasional basis, do not wish to invest in expensive metal or silicon cake tins and, in particular, where the cake is for a specific or one-off occasion such as a birthday cake in the shape of a numeral indicating the age of the person celebrating that birthday.

It is an important advantage of both the first embodiment and the unclaimed embodiment that the containers for baking can be supplied in flat pack form and then readily assembled by the end user. This allows for easy transport and storage prior to use. If desired, however, the containers could of course be offered for sale in a pre-assembled state. Other preferred advantages include:-
a) The containers utilise a novel corrugated cardboard design that allows the connection of the side walls to the base in a manner that enables a wide range of designs to be created.
b) The containers utilise a novel corrugated cardboard design that allows the connection of the side walls to the base in a manner that maintains continuity of any special surface treatments to meet food standard requirements for food contact.
c) The containers can utilise variations on novel corner and side wall/base locking configurations to create various designs.
d) The containers utilise a novel corner/junction in the side wall and base to eliminate or substantially reduce the possibility of the cake mix coming into contact with unprotected cut edges in the corrugated card.
e) The corrugated card from which the containers are preferably made allows for a more controlled distribution of heat (prevention of hot spots) during the cooking process. This is particularly important for baking large deep cakes.
f) Once baked, the cakes can be left in the baking containers for ease of handling and can be frozen in those same containers. This is particularly advantageous when handling large, heavy and potentially friable cakes.
g) The locking mechanism for the side walls can be reversed to allow the easy removal of the cakes from the containers once they have been baked.

The invention will now be described solely by way of example and with reference to the accompanying drawings (Figures 1 to 18 illustrate the first embodiment of this invention; while Figures 19 to 27 relate to the unclaimed embodiment) in which:-
Figure 1 is a plan view of the base (unfolded) of a container for use in baking a round cake.
Figure 2 is a side view of two side walls (unfolded) of a container for use in baking a round cake.
Figure 3 is a perspective view of the base of a container for use in baking a round cake.
Figure 4 is a perspective view of two side walls (unfolded) of a container for use in baking a round cake.
Figure 5 is a perspective view of two side walls (folded) of a container for use in baking a round cake.
Figure 6 is a perspective view of a container for use in baking a round cake (partially assembled with part cut away).
Figure 7 is a perspective view of a container for use in baking a round cake (fully assembled in cross-section).
Figure 8A is a perspective view of a container for use in baking a round cake (fully assembled); Figures 8B and 8C are cross-sections of part of that same container (fully assembled).
Figure 9 is a perspective view of a container for use in baking a round cake with a freestanding core (partially assembled with part cut away).
Figure 10 is a perspective view of a container for use in baking a round cake with a freestanding core (partially assembled with part cut away).
Figure 11 is a perspective view of a container for use in baking a round cake with a freestanding core (fully assembled in cross-section).
Figure 12 is a plan view of the base (unfolded) of a container for use in baking a cake in the shape of a heart.
Figure 13 is a perspective view of the base of a container for use in baking a cake in the shape of a heart.
Figure 14 is a perspective view of a container for use in baking a cake in the shape of a heart (partially assembled with part cut away).
Figure 15 is a plan view of the base (unfolded) of a container for use in baking a cake in the shape of a Christmas tree.
Figure 16 is a perspective view of the base of a container for use in baking a cake in the shape of a Christmas tree.
Figure 17 is a perspective view of a container for use in baking a cake in the shape of a Christmas tree (partially assembled with part cut away).
Figure 18 is a plan view of the base (unfolded) of another container for use in baking a round cake.
Figure 19 is a plan view of the base and side walls (unfolded) of a container for use in baking a square cake.
Figure 20 is a perspective view of the base and side walls (unfolded) of a container for use in baking a square cake.
Figures 21A, B and C are perspective views of the corner assembly (viewed from inside the container) of a container for use in baking a square cake; showing two of the side walls flat (A), half raised (B) and ¾ raised (C).
Figure 22 is a perspective view of a container (partially assembled, with the sides fully raised) for use in baking a square cake.
Figure 23 is a perspective view of a container (partially assembled, with the sides fully raised but the corner tabs unfolded) for use in baking a square cake.
Figure 24 is a perspective view of a container (fully assembled) for use in baking a square cake.
Figure 25 is a plan view of the base and side walls (unfolded) of another container for use in baking a square cake.
Figures 26A, B and C are perspective views of the corner assembly (viewed from inside the container) of the container of Figure 25 for use in baking a square cake; showing two of the side walls flat (A), half raised (B) and ¾ raised (C).
Figure 27 is a perspective view of the container of Figure 25 (fully assembled) for use in baking a square cake.
Figures 28A (sectional elevation), B (plan view) and C (sectional elevation) show a hinged push through tab suitable for use in the first embodiment and in the second embodiment of the present invention.

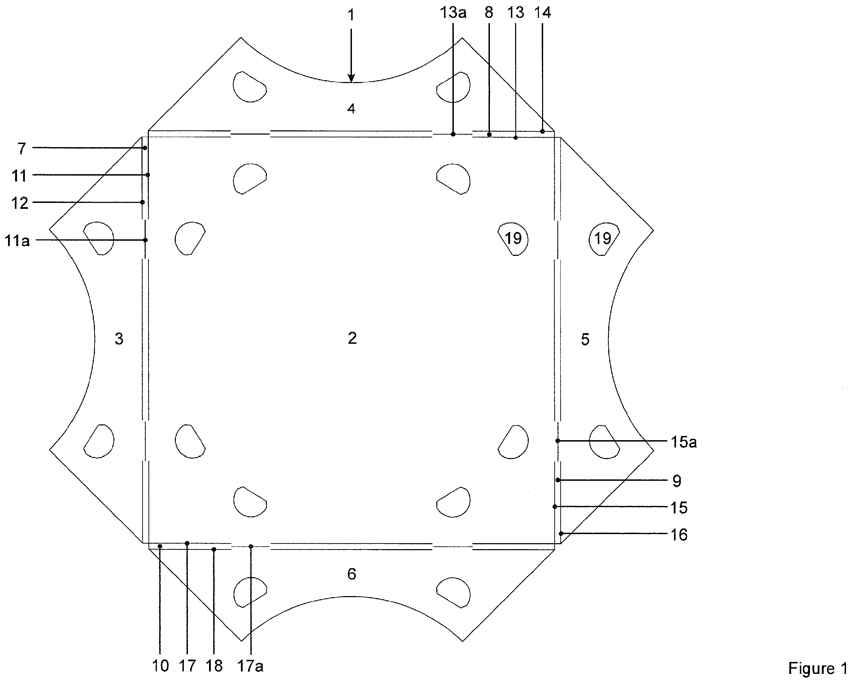

Referring to Figure 1, the base 1 for use in baking a round cake comprises a main base portion 2 and four base flaps 3, 4, 5 and 6, and which are shown in the unfolded state. Each of the said base flaps is connected to the main base portion by means of a hinge or fold 7, 8, 9 and 10 respectively, and each hinge or fold is defined by a pair of creases, 11 and 12, 13 and 14, 15 and 16, and 17 and 18 respectively. The creases are parallel, set 4mm apart in this example; although this spacing may be different depending upon various factors, such as the thickness of the corrugated cardboard from which the base is made. Each pair is reduced at two sections along their length to a single crease 11a, 13a, 15a and 17a. Push through tabs 19 are provided on the main base portion and on each of the base flaps.

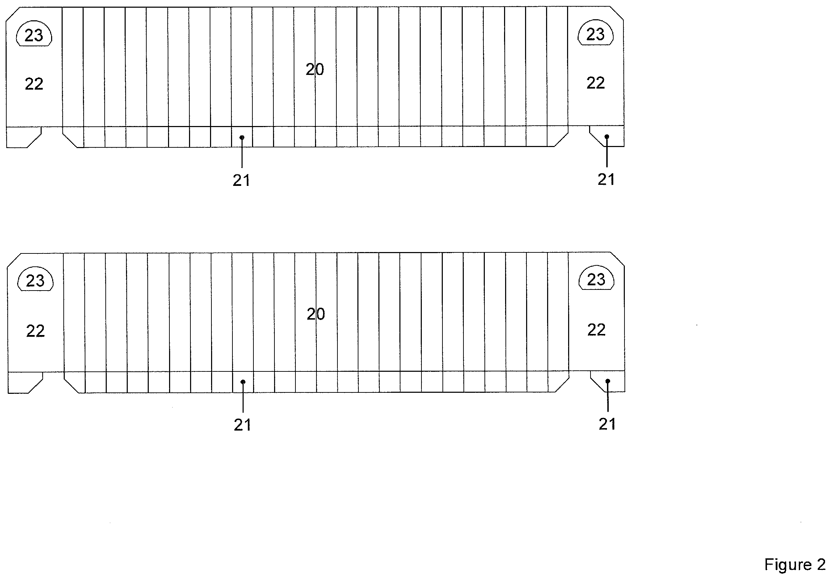

In Figure 2, each of the two side wall members 20 has a number of tabs 21 along its bottom edge. The side wall members have a flange 22 at each end. There is a push through tab 23 provided on each of the flanges to secure the flanges together when they overlie each other.

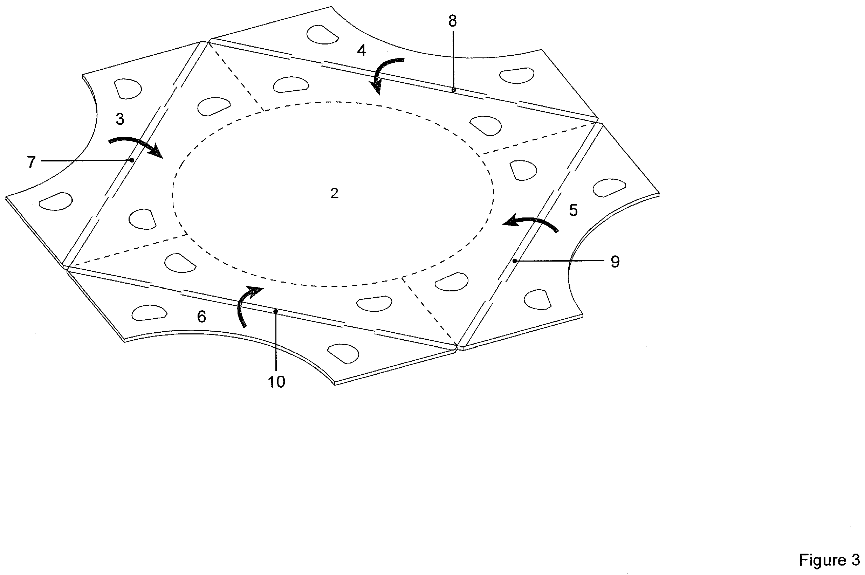

Turning to Figure 3, the arrows indicate the direction in which the four base flaps 3, 4, 5 and 6 are folded about the hinges 7, 8, 9 and 10, respectively, when the base of the baking container is being assembled. The broken lines indicate the position of the base flaps once they have been folded so as to overlie the main base portion 2.

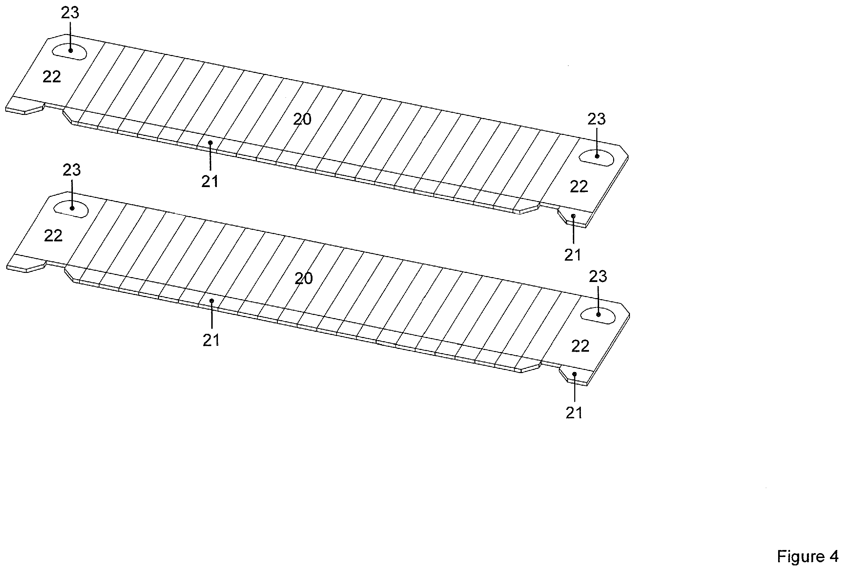

In Figure 4, the two side wall members 20, the tabs 21 along their bottom edges, the flanges 22 and the push through tabs 23 are shown in the unfolded state.

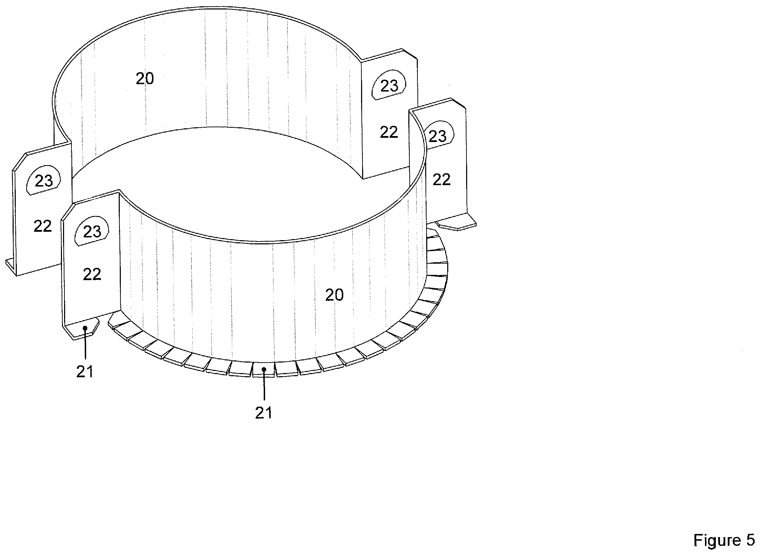

Figure 5 shows each of the two side wall members 20 folded into a semi-circular shape such that, when joined together, they would form the side walls of a container for use in baking a round cake. The tabs 21 along the bottom edges of the side wall members are shown folded outwards; and the flanges 22 at the ends of each side wall member, each with a push through tab 23, are also folded outwards.

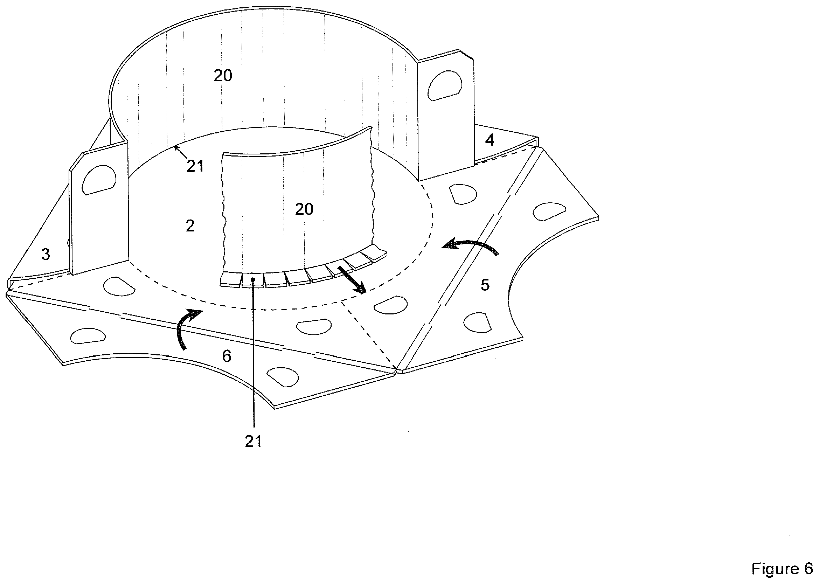

In Figure 6, the baking container for a round cake is shown partially assembled. The base flaps 3 and 4 have been folded inwards so as to overlie the main base portion 2, the side wall member 20 at the rear has been secured in position with the tabs along its bottom edge (not visible) sandwiched between the said base flaps 3 and 4 and the main base portion 2. The side wall member 20 at the front, shown with part cut away, has the tabs 21 along its bottom edge folded outwards. Once the base flaps 5 and 6 are folded inwards (in the direction indicated by the arrows), so as to overlie the main base portion 2, the tabs 21 along the bottom edge of that side wall member will be secured in position by becoming sandwiched between the said base flaps 5 and 6 and the main base portion 2.

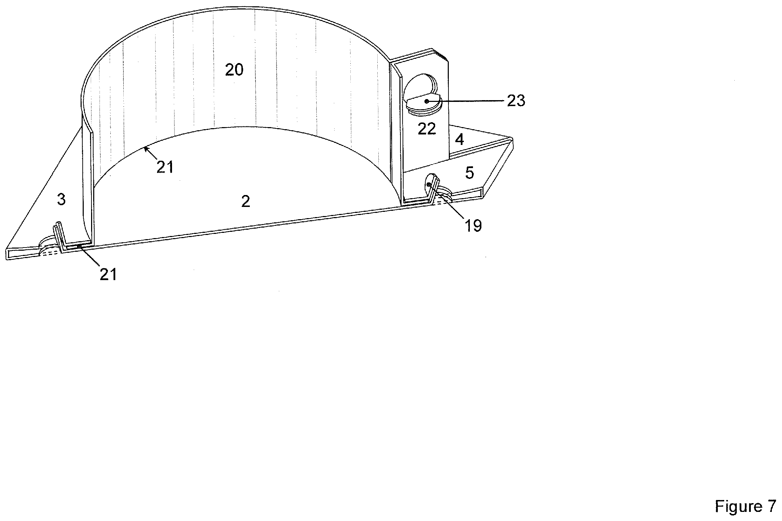

Figure 7 is a cross-section of a fully assembled baking container for a round cake. The side wall member 20 is secured in position with the tabs 21 along its bottom edge sandwiched between the base flaps 3, 4 and 5, and the underlying main base portion 2; the inside edges of the base flaps abutting and supporting the side walls; with the said base flaps being secured in that position by means of the push through tabs 19 (shown in the locked/engaged state); and the flanges 22 of the two side wall members are held together by the push through tab 23 (shown in the locked/engaged state).

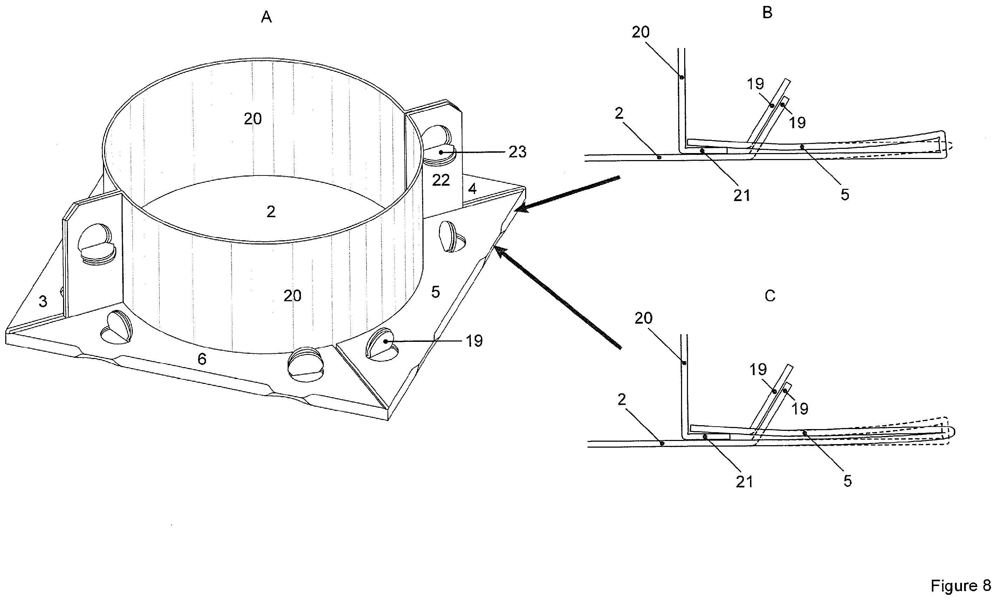

Figure 8A shows a fully assembled baking container for a round cake. The two side wall members 20 are secured in position with the tabs along its bottom edge (not visible) sandwiched between the base flaps 3, 4, 5 and 6, and the underlying main base portion, with the said base flaps being secured in that position by means of the push through tabs 19 (shown in the locked/engaged state); and the flanges 22 of the two side wall members are held together by the push through tab 23 (shown in the locked/engaged state). Figures 8B and 8C are cross-sections of part of that fully assembled baking container and show one of the base flaps, at a place where its hinge is defined by a pair of creases (Figure 8B) and at a place where its hinge is reduced to a single crease (Figure 8C), secured in position by means of a push through tab.

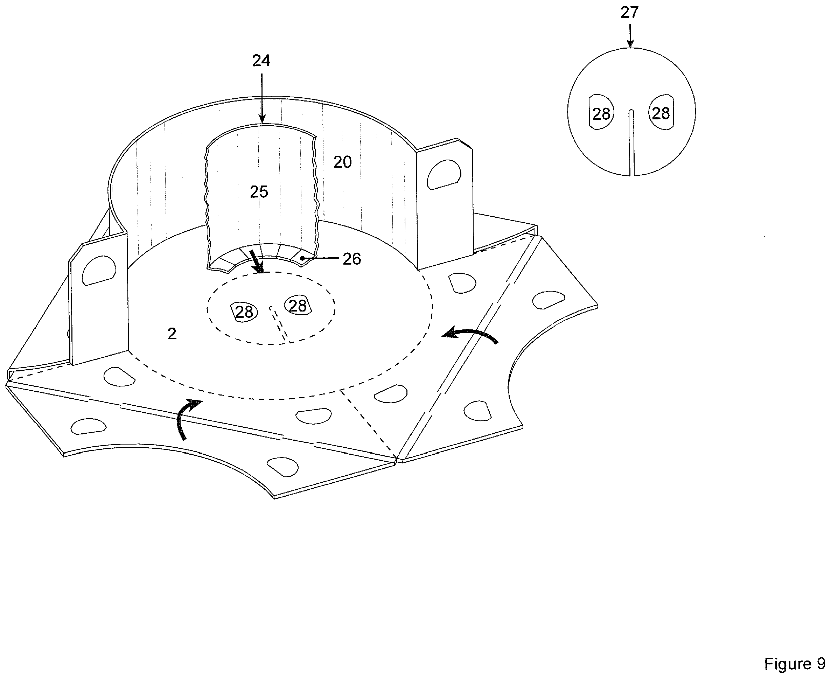

Figure 9 shows a partially assembled baking container for a round cake with a hole at its centre. In addition to being an attractive shape in its own right, such a cake could be seen as resembling the numeral zero. It will be apparent that the container is constructed in the same manner as described for the preceding figures, except that it includes a freestanding core 24 (shown with part cut away) which defines the hole at the centre of the cake. The core 24 comprises a side wall 25 which has tabs 26 along its bottom edge that fold outwards relative to the said side wall. It is held in position by means of an upper core insert 27 that is placed on top of the outwardly folded tabs 26 and secured to the main base portion 2 by push through tabs 28.

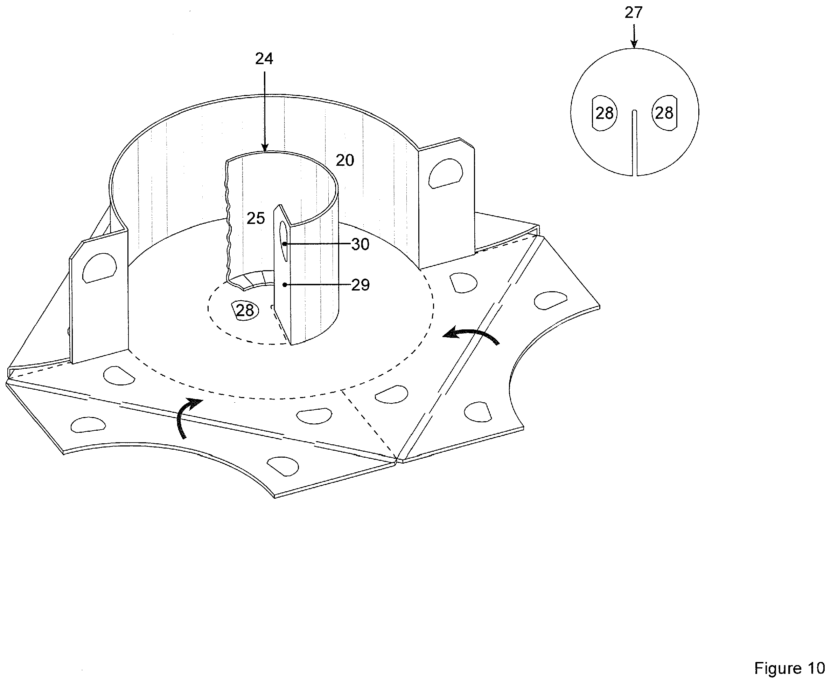

Figure 10 is a further view of the partially assembled baking container of Figure 9. The side wall 25 of the freestanding core 24 (shown with part cut away) has a flange 29 at either end, which is folded outwards (i.e. such that it extends into the hole at the centre of the cake) so that the ends of the side wall can be secured together by means of a push through tab 30.

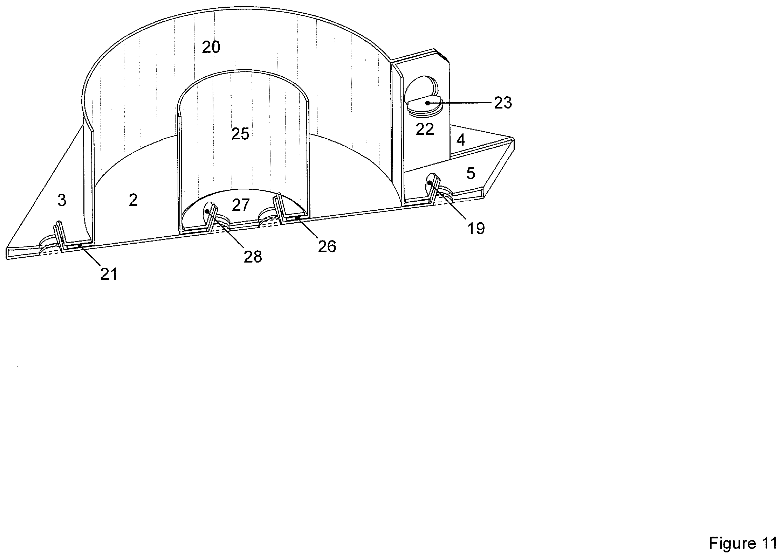

Figure 11 is a cross-section of a fully assembled baking container for a round cake with a hole at its centre. The side wall member 20 is secured in position with the tabs 21 along its bottom edge sandwiched between the base flaps 3, 4 and 5, and the underlying main base portion 2, with the said base flaps being secured in that position by means of the push through tabs 19 (shown in the locked/engaged state); and the flanges 22 of the two side wall members are held together by the push through tab 23 (shown in the locked/engaged state). The side wall 25 of the freestanding core is held in position by means of an upper core insert 27 placed on top of the outwardly folded tabs 26 and secured to the main base portion 2 by push through tabs 28 (shown in the locked/engaged state).

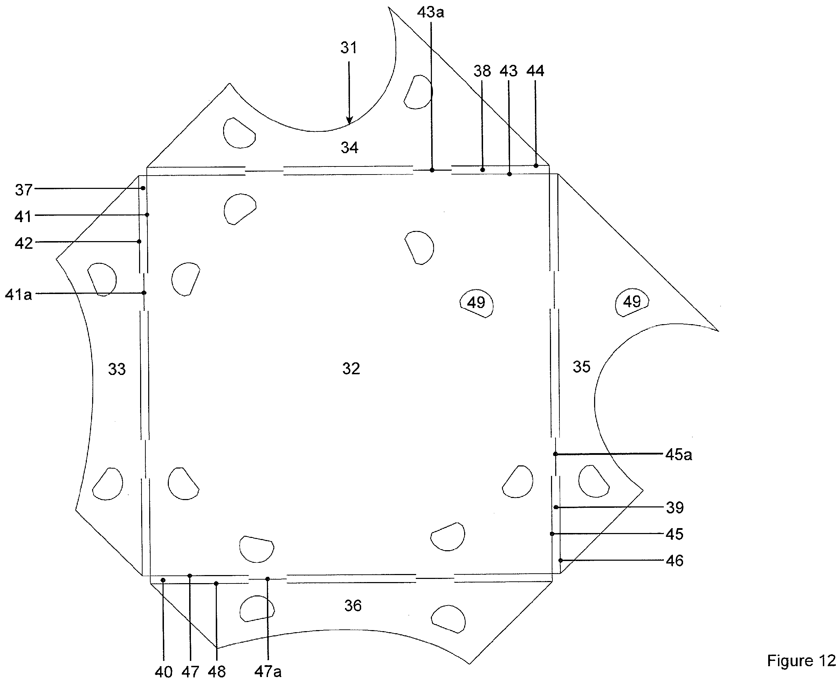

Referring to Figure 12, the base 31 for use in baking a cake in the shape of a heart comprises a main base portion 32 and four base flaps 33, 34, 35 and 36, and which are shown in the unfolded state. Each of the said base flaps is connected to the main base portion by means of a hinge or fold 37, 38, 39 and 40 respectively, and each hinge or fold is defined by a pair of creases, 41 and 42, 43 and 44, 45 and 46, and 47 and 48 respectively. The creases are parallel, and each pair is reduced at two sections along their length to a single crease 41a, 43a, 45a and 47a. Push through tabs 49 are provided on the main base portion and on each of the base flaps.

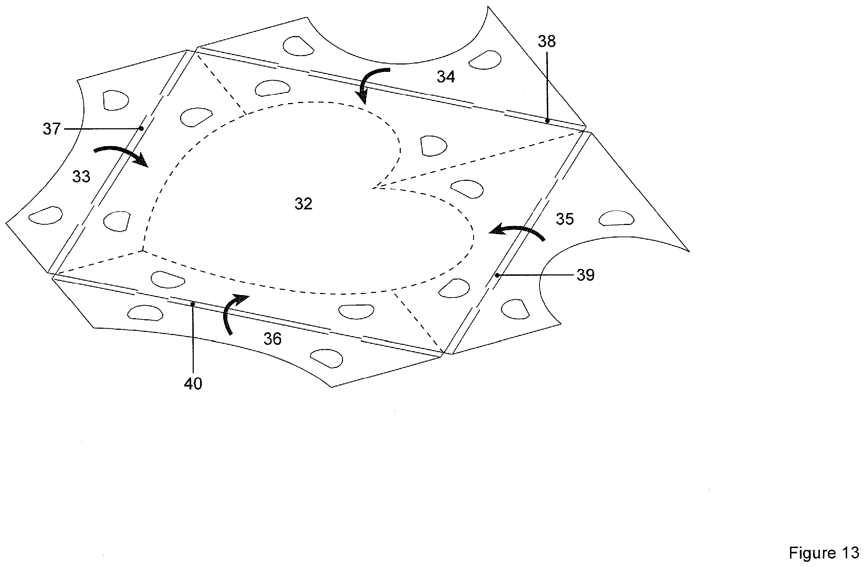

Turning to Figure 13, the arrows indicate the direction in which the four base flaps 33, 34, 35 and 36 are folded about the hinges 37, 38, 39 and 40, respectively, when the base of the baking container is being assembled. The broken lines indicate the position of the base flaps once they have been folded so as to overlie the main base portion 32.

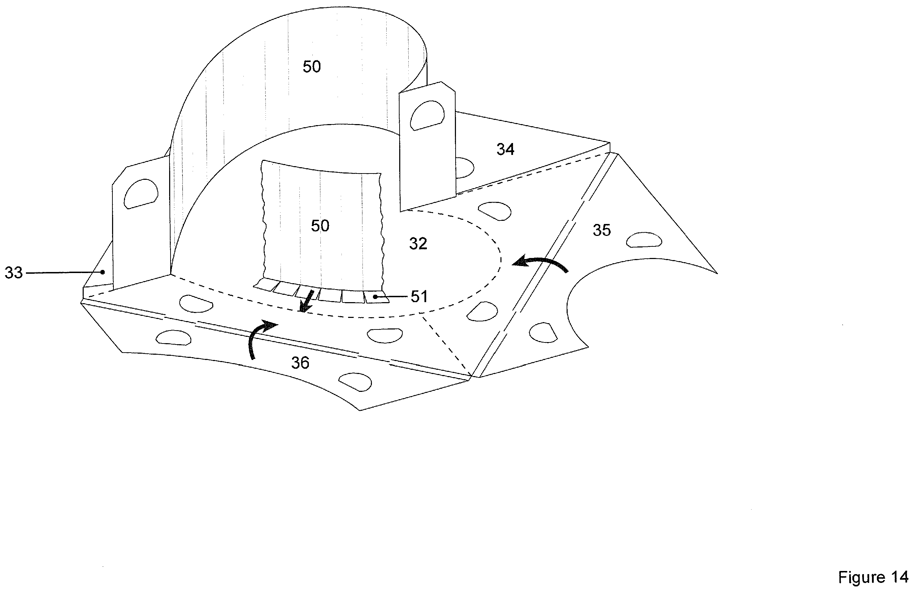

In Figure 14, the baking container for a cake in the shape of a heart is shown partially assembled. The base flaps 33 and 34 have been folded inwards so as to overlie the main base portion 32, the side wall member 50 at the rear has been secured in position with the tabs along its bottom edge (not visible) sandwiched between the said base flaps 33 and 34 and the main base portion 32. The side wall member 50 at the front, shown with part cut away, has the tabs 51 along its bottom edge folded outwards. Once the base flaps 35 and 36 are folded inwards (in the direction indicated by the arrows), so as to overlie the main base portion 32, the tabs 51 along the bottom edge of that side wall member will be secured in position by becoming sandwiched between the said base flaps 35 and 36 and the main base portion 32.

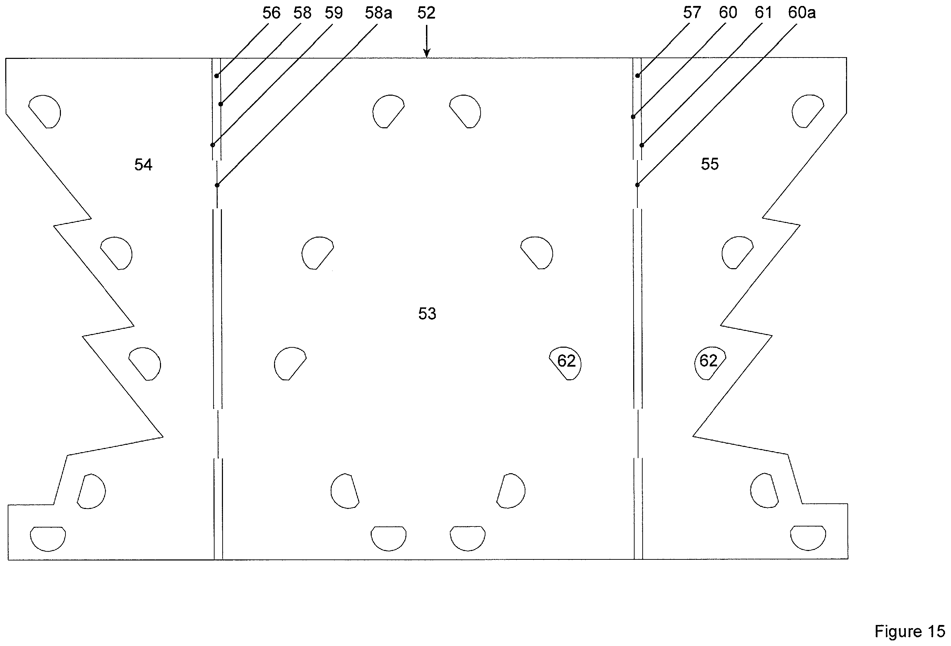

Referring to Figure 15, the base 52 for use in baking a cake in the shape of a Christmas tree comprises a main base portion 53 and two base flaps 54 and 55, and which are shown in the unfolded state. Each of the said base flaps is connected to the main base portion by means of a hinge or fold 56 and 57 respectively, and each hinge or fold is defined by a pair of creases, 58 and 59, and 60 and 61 respectively. The creases are parallel, and each pair is reduced at two sections along their length to a single crease 58a and 60a. Push through tabs 62 are provided on the main base portion and on each of the base flaps.

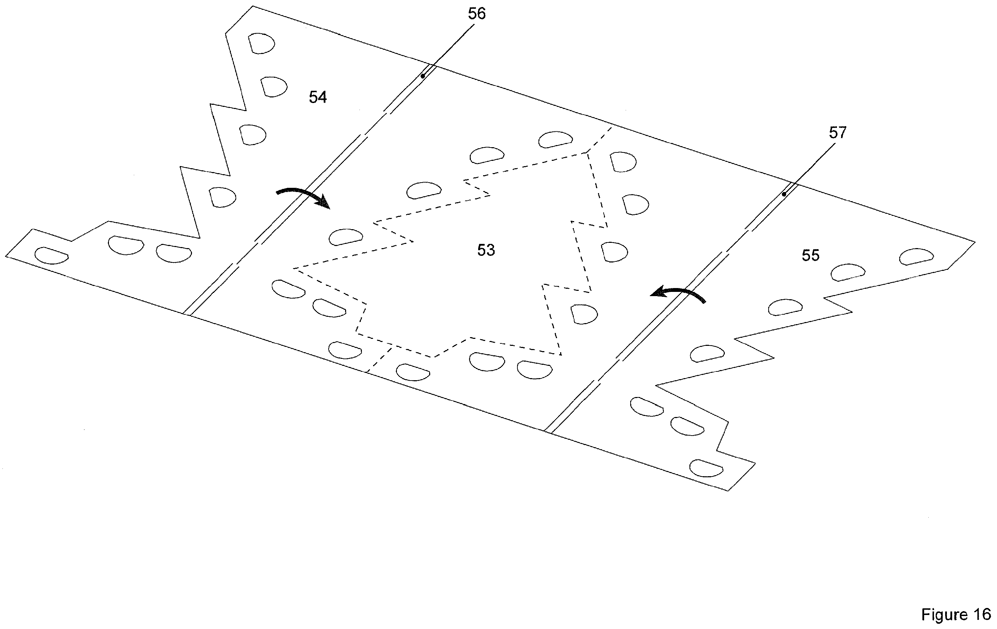

Turning to Figure 16, the arrows indicate the direction in which the two base flaps 54 and 55 are folded about the hinges 56 and 57, respectively, when the base of the baking container is being assembled. The broken lines indicate the position of the base flaps once they have been folded so as to overlie the main base portion 53.

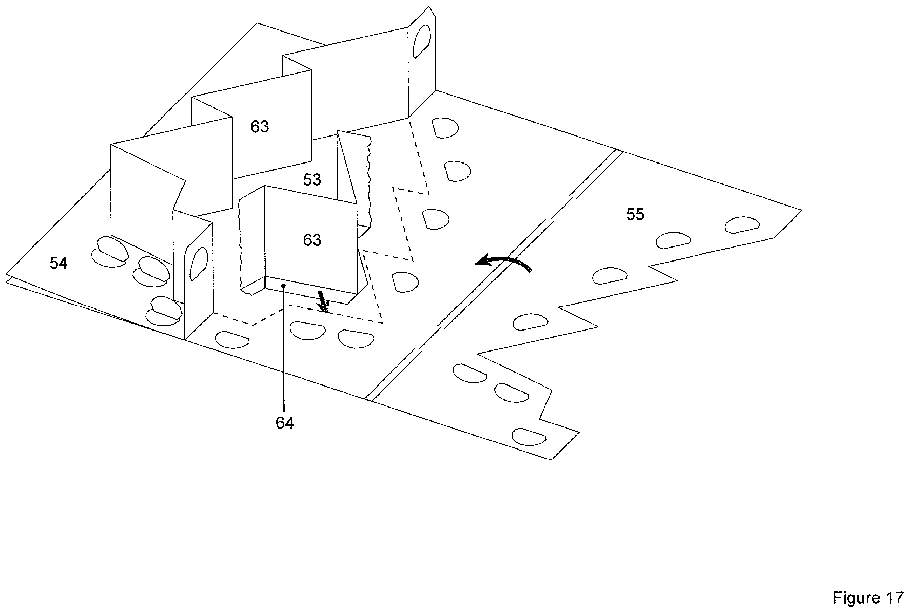

In Figure 17, the baking container for a cake in the shape of a Christmas tree is shown partially assembled. The base flap 54 has been folded inwards so as to overlie the main base portion 53, the side wall member 63 on the left has been secured in position with the tabs along its bottom edge (not visible) sandwiched between the said base flap 54 and the main base portion 53. The side wall member 63 on the right, shown with part cut away, has the tabs 64 along its bottom edge folded outwards. Once the base flap 55 is folded inwards (in the direction indicated by the arrow), so as to overlie the main base portion 53, the tabs 64 along the bottom edge of that side wall member will be secured in position by becoming sandwiched between the said base flap 55 and the main base portion 53.

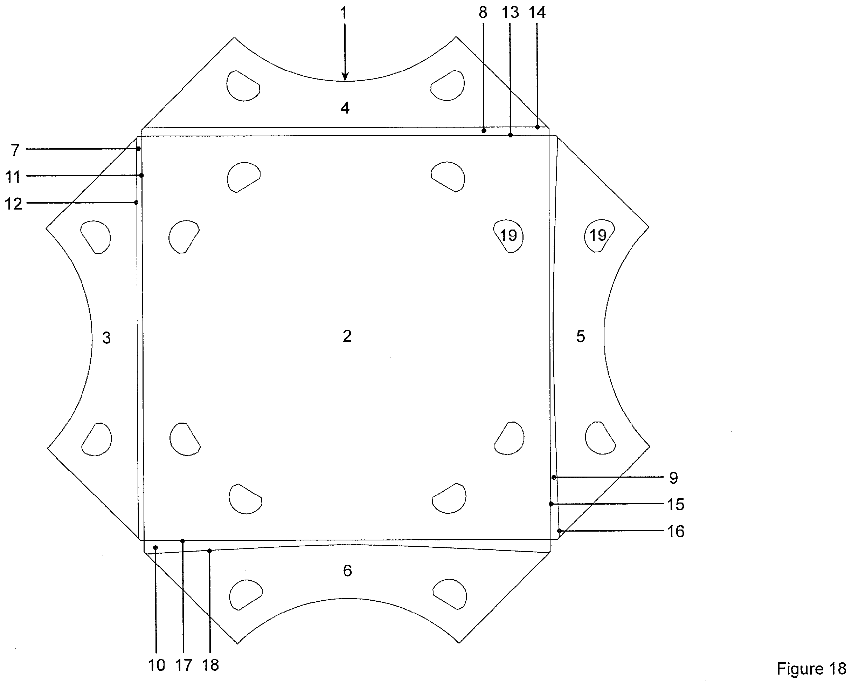

Figure 18 shows the base of another container according to the first embodiment of this invention for use in baking a round cake. The base 1 comprises a main base portion 2 and four base flaps 3, 4, 5 and 6, and which are shown in the unfolded state. Each of the said base flaps is connected to the main base portion by means of a hinge or fold 7, 8, 9 and 10 respectively, and each hinge or fold is defined by a pair of creases, 11 and 12, 13 and 14, 15 and 16, and 17 and 18 respectively. The creases 11 and 12 are parallel, set 4mm apart, such that the resulting hinge 7 is of a constant thickness; the creases 13 and 14 are also parallel but are set a greater distance apart (6mm), such that the resulting hinge 8 is thicker than the aforementioned hinge 7. The creases 15 and 16 are not parallel, such that the resulting hinge 9 varies in thickness along its length from 6mm to 4mm and then back to 6mm (i.e. it is thinner in the middle than at either end); the creases 17 and 18 are also not parallel such that the resulting hinge 10 varies in thickness along its length from 8mm to 3mm and then back to 8mm (i.e. it is thinner in the middle than at either end). Push through tabs 19 are provided on the main base portion and on each of the base. When this base is used together with the side walls shown in Figure 2, the container can be assembled in a similar manner to that shown in Figures 5 to 8.

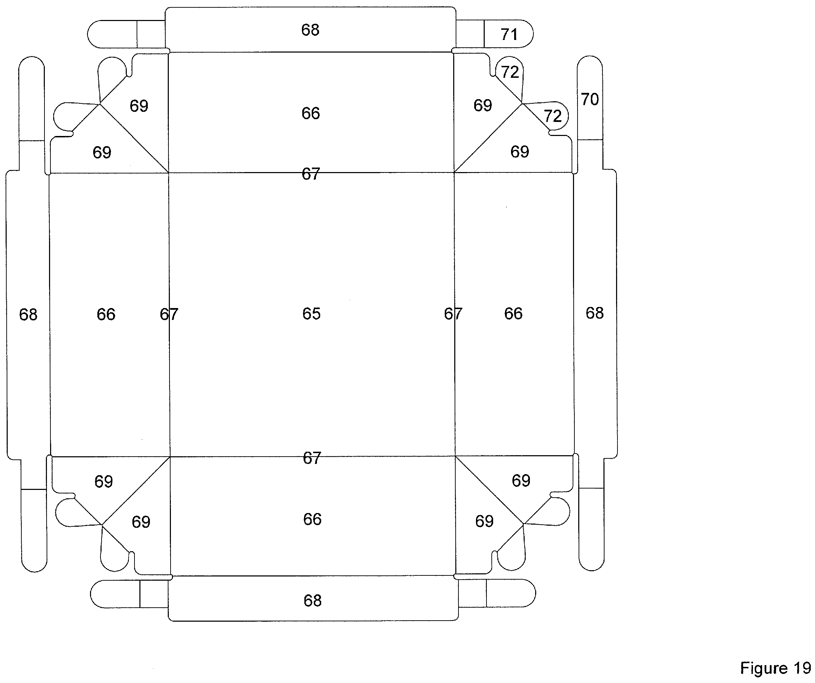

Figure 19 shows in the unfolded state a container for use in baking a square cake. It comprises a base 65 and four side wall portions 66; the said side wall portions being hingedly attached to the said base along straight fold lines 67. A return or flange 68, which can be folded outwards relative to the said side wall, runs along the top edge of each of the side walls. An outwardly foldable gusset comprising a pair of gusset portions 69 is provided between the ends of the adjacent side wall portions 66. Retention means comprising a long tab 70, a short tab 71 and two corner tabs 72 are provided for securing the said gusset portions in contact with each other when the container is in the assembled state.

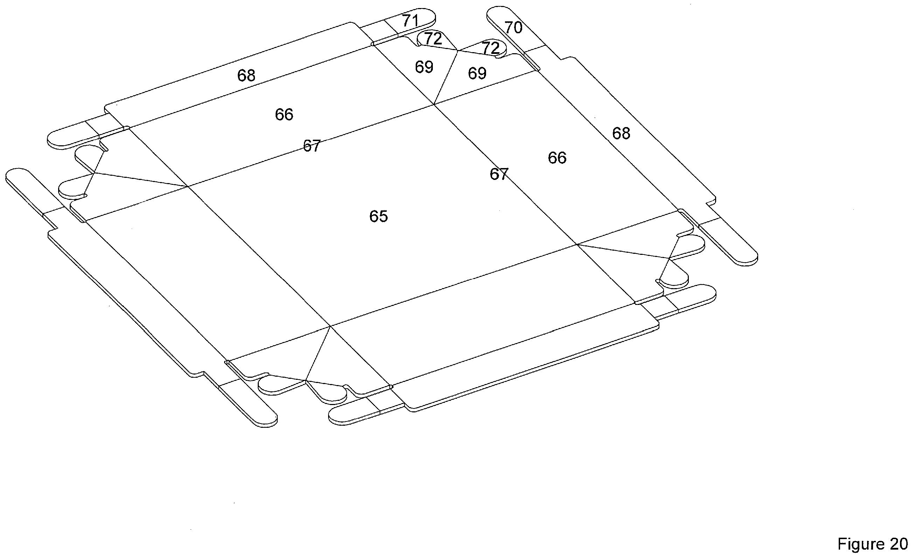

In Figure 20, the container for use in baking a square cake is again shown in the unfolded state.

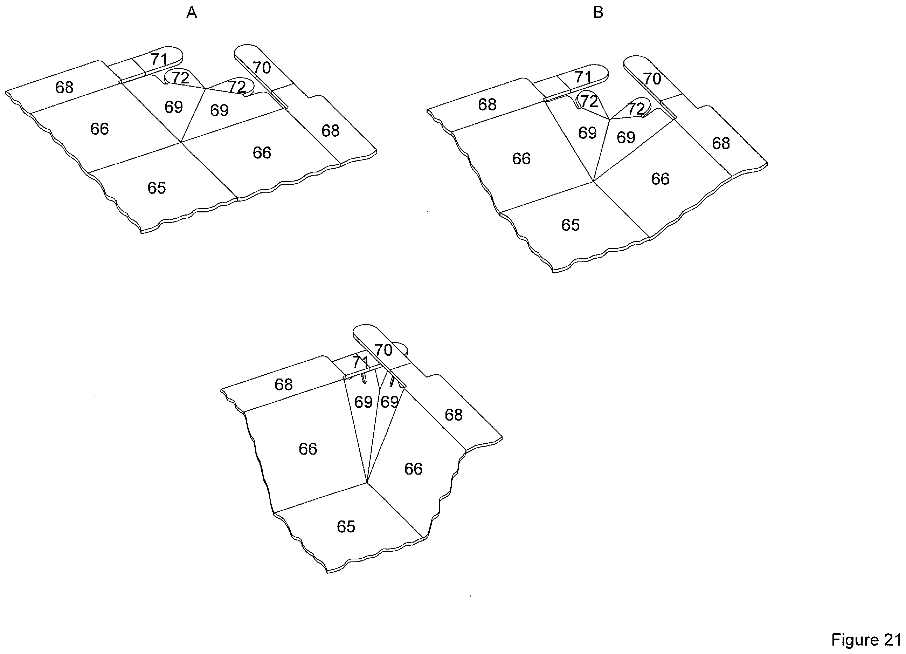

Figure 21 shows three stages in the assembly of the corner of the container for baking a square cake. In Figure 20A, the base 65, two side wall portions 66, gusset portions 69 and long tab 70, short tab 71 and two corner tabs 72 are shown in the unfolded state. In Figure 20B, the side wall portions 66 are half raised and, in consequence, the gusset portions 69 between them are partially folded outwards. In Figure 20C, the side wall portions are ¾ raised and, in consequence, the gusset portions 69 between them are folded outwards to a greater extent (than in Figure 20B), the returns or flanges 68 are folded outwards and the long tab 70 overlies the short tab 71.

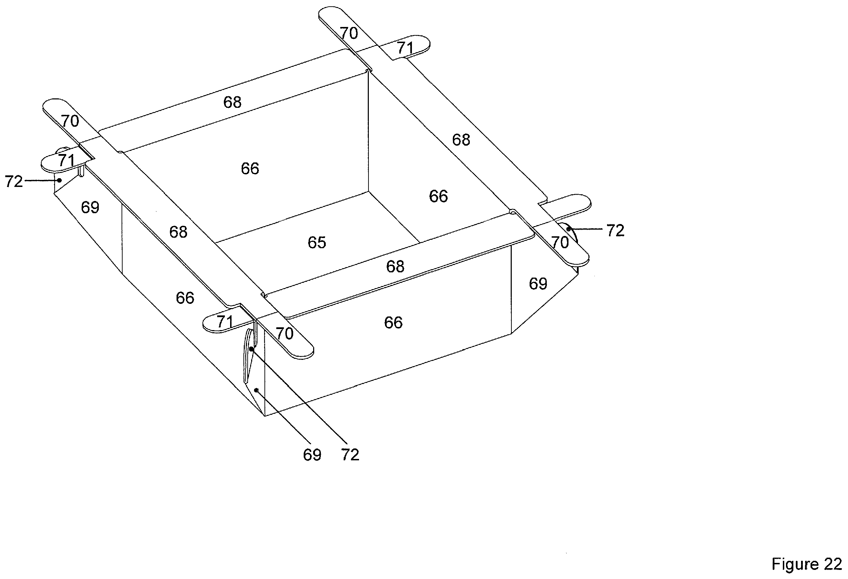

In Figure 22, the four side wall portions 66 are fully raised into a vertical position, the returns or flanges 68 are folded outwards so as to be horizontal relative to the side walls, the gusset portions 69 are fully folded outwards and, at each corner, the long tab 70 overlies the short tab 71.

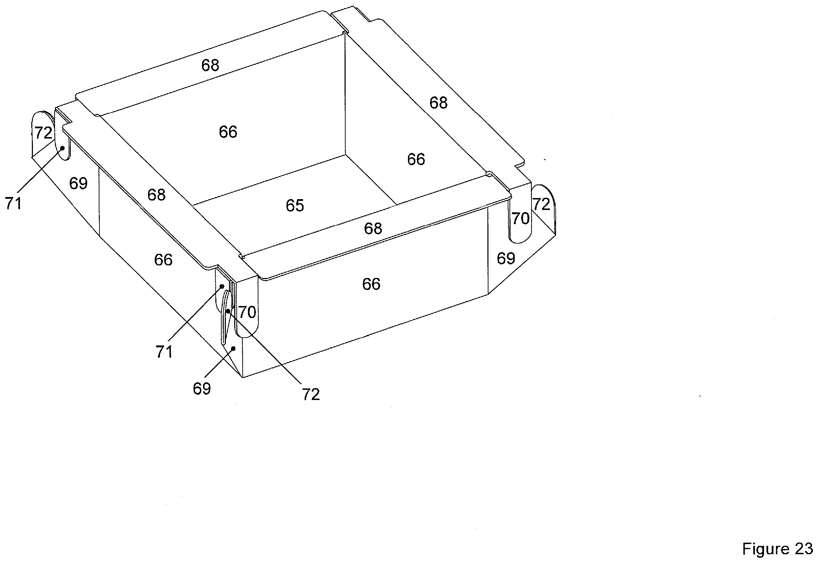

Turning to Figure 23, it will be seen that, at each corner, the ends of the long tab 70 and of the short tab 71 have been folded downwards so as to lie against the side wall portions. The corner tabs 72 are still unfolded.

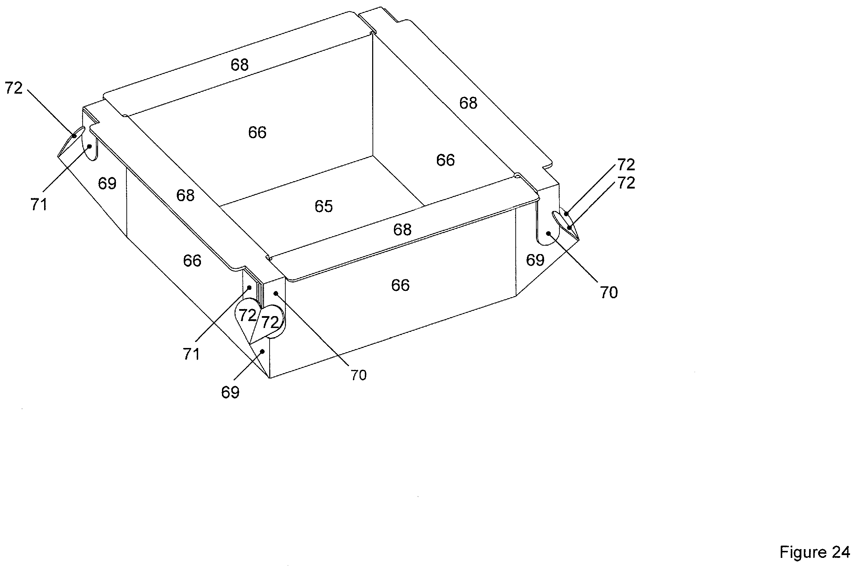

Figure 24 shows the fully assembled container for use in baking a square cake. The corner tabs 72 are folded outwards so as to secure/lock the underlying long tab 70 and short tab 71 in position at each of the four corners.

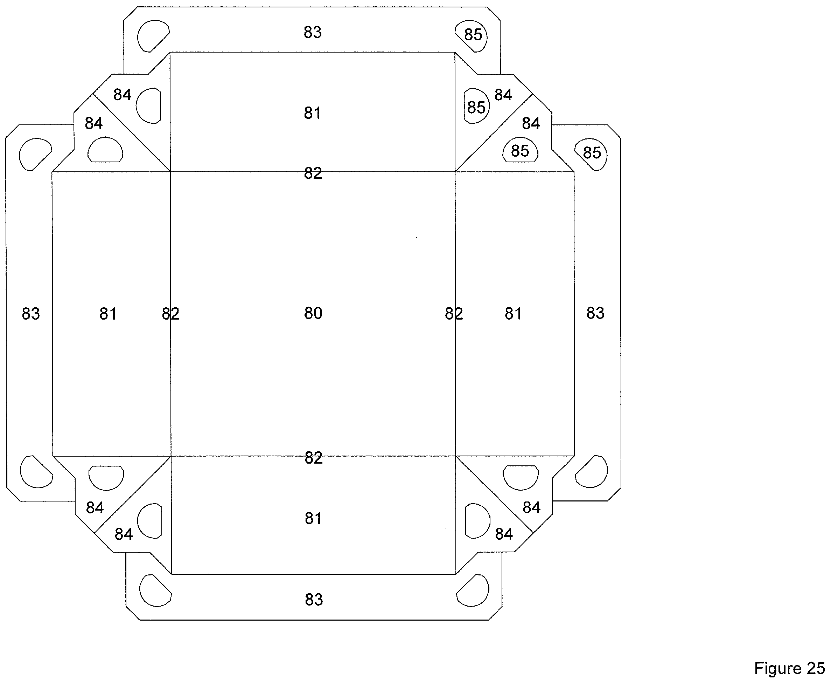

Figure 25 shows in the unfolded state another container according to the unclaimed embodiment for use in baking a square cake. It comprises a base 80 and four side wall portions 81; the said side wall portions being hingedly attached to the said base along straight fold lines 82. A return or flange 83, which can be folded outwards relative to the said side wall, runs along the top edge of each of the side walls. An outwardly foldable gusset comprising a pair of gusset portions 84 is provided between the ends of the adjacent side wall portions 81. Retention means comprising push through tabs 85 are provided for securing the said gusset portions in contact with each other when the container is in the assembled state.

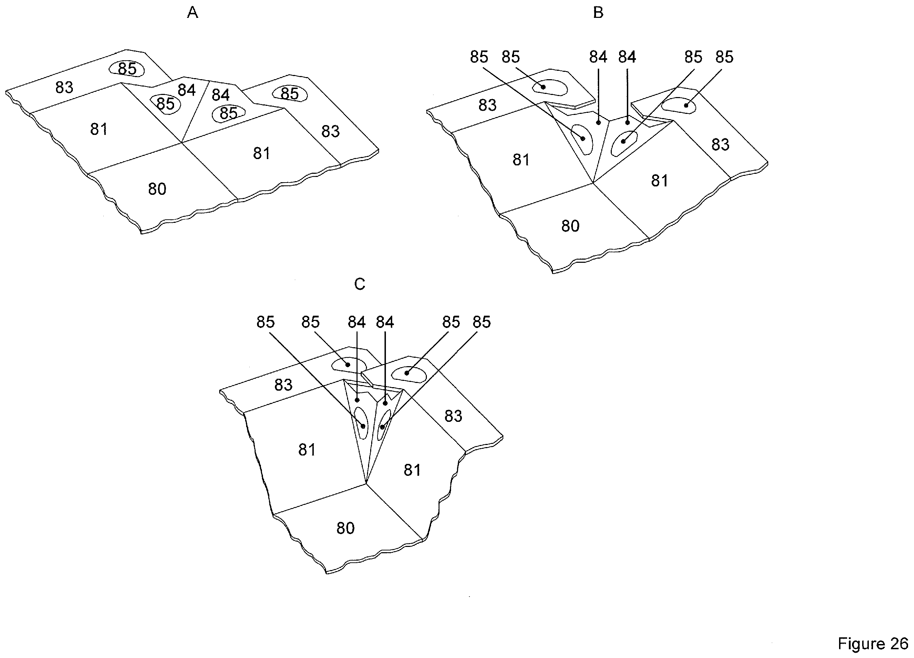

Figure 26 shows three stages in the assembly of the corner of the container for baking a square cake. In Figure 26A, the base 80, two side wall portions 81, gusset portions 84 and push through tabs 85 are shown in the unfolded state. In Figure 26B, the side wall portions 81 are half raised and, in consequence, the gusset portions 84 between them are partially folded outwards. In Figure 26C, the side wall portions are ¾ raised and, in consequence, the gusset portions 84 between them are folded outwards to a greater extent (than in Figure 26B), and the returns or flanges 83 are folded outwards.

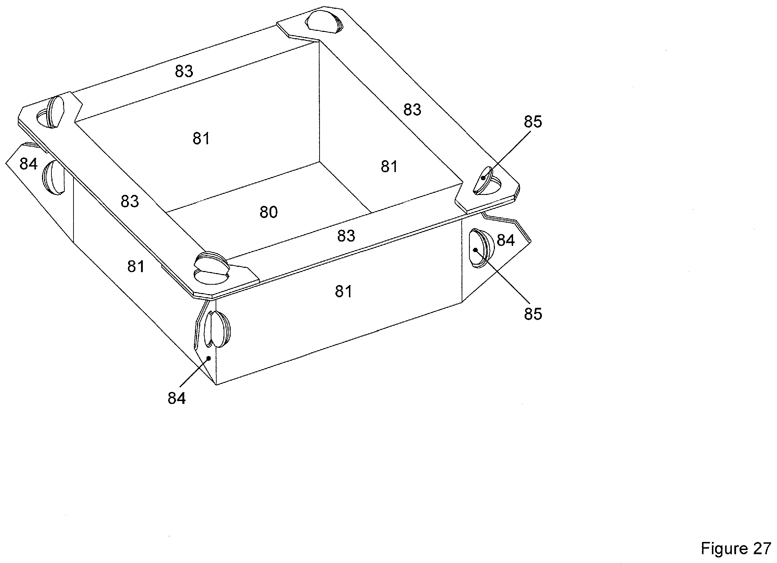

Figure 27 shows the fully assembled container for use in baking a square cake. The push through tabs 85 are engaged so as to secure/lock the gusset portions and the four corners in position.

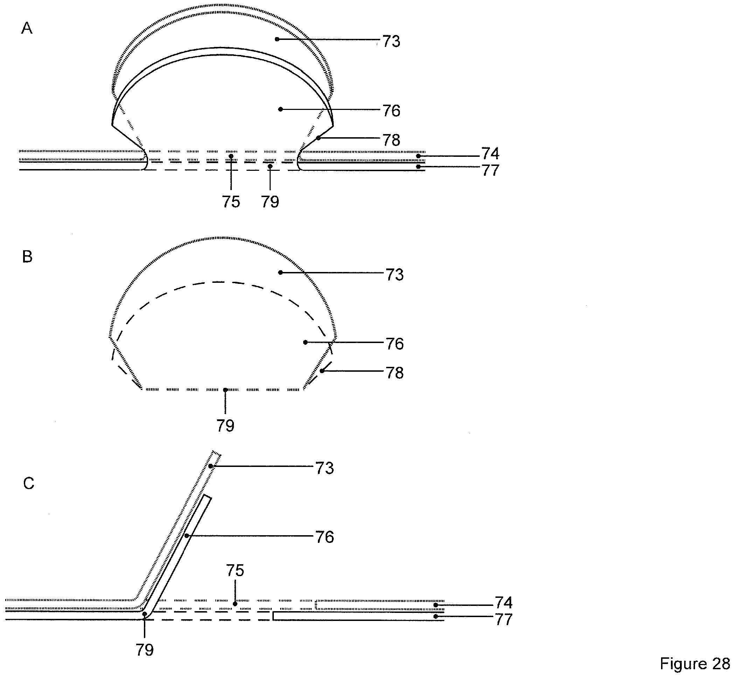

Figure 28 shows three views of a hinged push through tab, suitable for use in both the first and the unclaimed embodiments, and which is formed from two layers of corrugated cardboard (or other suitable material from which the baking containers are made) that overlie one another. The function of the tab 73 in the upper layer 74 is essentially to provide a hole or aperture 75 through which the tab 76 in the lower layer 77 is pushed. The tab 76 has a bulbous shoulder or mushroom shape 78 adjacent to the hinge (fold line) 79 and which is wider than the corresponding part of the aligned hole or aperture 75 in the upper layer. In Figures 28A and 28C (both sectional elevations), the push through tab is in the engaged (locked) position. Figure 28B (a plan view) shows the tab 73 in the upper layer with the outline of the tab 76 in the lower layer shown in a broken line (since it is hidden from view). The act of folding the tab 76 in the lower layer from the horizontal into the vertical (upright) position causes the extra width of the shoulder 78 to project over the edge of the hole or aperture 75 in the upper layer and so lock the two layers together. The arced edge of the tab 76 at the point of the shoulder is smaller than the corresponding arc on the tab 73 in the upper layer. This avoids unnecessary interference/resistance with the edges of the tab holes when rotating the tabs into the vertical position apart from in the area of the shoulder 78 of the tab 76 that exceeds in width the edge of the hole or aperture 75 in the upper layer 74.

As will be apparent from the above, it is the lower tab 76 that does the work of locking the two layers or sheets of corrugated cardboard together. In this regard, provided that there is a suitably sized aperture in the upper layer it would be possible for the tab in the upper layer to be omitted or removed.

## Claims

1. An ovenable fold-flat baking container assemblable from a flat unassembled form into an assembled form, the container comprising a flat base (1) and at least one side wall member (20), wherein:
the base (1) comprises a main base portion (2) and one or more base flaps (3, 4, 5, 6) which are hingedly connected to the main base portion (2) the or each base flap (3, 4, 5, 6) being foldable about its hinge connection between a first inactive position, in the unassembled form, in which the flap is substantially co-planar with the main base portion (2) and a second active position, in the assembled form, in which it overlies the main base portion (2); the or each side wall member (20) has a main wall portion and which has along its bottom edge one or more tabs (21), each of said tabs (21) being capable of folding outwards relative to the main wall portion;
such that, when the main wall portion of the side wall has its bottom edge in contact with the main base portion (2) with the tabs (21) folded outwards, and one or more base flaps (3, 4, 5, 6) are folded into an active position, the tabs (21) are sandwiched between the base flaps (3, 4, 5, 6) and the main base portion (2) with the main wall portion upstanding from the main base portion (2);
retaining means being provided to secure the one or more base flaps (3, 4, 5, 6) in their active position, such that the main base portion (2) and the one or more main wall portions form an open-topped enclosed cavity;
the retaining means comprising at least one hinged push through tab (19) in the base which, when in the engaged position, extends from the base through a corresponding aligned aperture in the overlying base flap (54).

2. A container as claimed in claim 1, wherein the hinge connection for the or each base flap (54) is defined by a crease or other line of weakness.

3. A container as claimed in claim 1 or claim 2, wherein the hinge connection for the or each base flap (54) is defined by one or a combination of: i) a crease (11, 12, 13, 14, 15, 16, 17, 18), ii) a pair of spaced creases (11, 12, 13, 14, 15, 16, 17, 18) or iii) an alternative type of line or lines of weakness.

4. A container as claimed in claim 3, wherein the pair of spaced creases (11, 12, 13, 14, 15, 16, 17, 18) or other lines of weakness is reduced to a single crease or other line of weakness at one or more points along its length.

5. A container as claimed in any one of claims 1 to 4, wherein the inwardly facing edge of the base flap (54) or of each base flap (54) is shaped such that, when the main wall portion of the side wall member (20) has its bottom edge in contact with the main base portion (2) with the tabs (21) folded outwards, the one or more base flaps (54) are folded into an active position, and the tabs are sandwiched between the base flaps (54) and the main base portion (2), the inwardly facing edge of the base flap or flaps (54) forms a substantially continuous abutment with the side wall member (20).

6. A container as claimed in any one of claims 1 to 5, wherein the at least one hinged push through tab has a bulbous shoulder or mushroom shape adjacent to the hinge.

7. A container as claimed in any one of claims 1 to 6, wherein the base (1) and the side wall members (20) are made from corrugated cardboard.

8. A container as claimed in claim 7, wherein the corrugated cardboard comprises an outer layer, a middle layer and an inner layer, said inner layer comprising greaseproof or vegetable parchment paper.

## Patentansprüche

1. Ofentaugliche, auseinanderfaltbare Backform, die sich aus einem flachen, nicht zusammengefügten Zustand in einen zusammengefügten Zustand zusammenfügen lässt, wobei die Form einen flachen Boden und mindestens ein Seitenwandelement (20) umfasst, wobei:
der Boden (1) einen Bodenhauptteil (2) und eine oder mehrere Bodenklappen (3, 4, 5, 6) umfasst, die klappbar mit dem Bodenhauptteil (2) verbunden sind, wobei sich die oder jede Bodenklappe (3, 4, 5, 6) zwischen einer ersten, inaktiven Position im nicht zusammengefügten Zustand, in der die Klappe im Wesentlichen koplanar mit dem Bodenhauptteil (2) ist, und einer zweiten, aktiven Position im zusammengefügten Zustand, in der sie auf dem Bodenhauptteil (2) aufliegt, um ihre Klappverbindung herum falten lässt;
das oder jedes Seitenwandelement (20) einen Wandhauptteil und entlang seiner unteren Kante eine oder mehrere Laschen (21) aufweist, von denen jede in Bezug auf den Wandhauptteil nach außen gefaltet werden kann;
und zwar so, dass, wenn sich der untere Rand des Wandhauptteils der Seitenwand mit nach außen gefalteten Laschen (21) mit dem Bodenhauptteil (2) in Kontakt befindet und eine oder mehrere Bodenklappen (3, 4, 5, 6) in eine aktive Position gefaltet sind, die Laschen (21) zwischen den Bodenklappen (3, 4, 5, 6) und dem Bodenhauptteil (2) liegen, wobei der Wandhauptteil aufrecht auf dem Bodenhauptteil (2) steht;
Haltemittel zum derartigen Befestigen der einen oder der mehreren Bodenklappen (3, 4, 5, 6) in ihrer aktiven Position vorgesehen sind, dass der Bodenhauptteil (2) und der eine oder die mehreren Wandhauptteile einen oben offenen, umschlossenen Hohlraum bilden;
die Haltemittel im Boden mindestens eine klappbare Durchstecklasche (19) umfassen, die, wenn sie sich in der eingesteckten Position befindet, vom Boden aus durch eine entsprechende ausgerichtete Öffnung in der darüberliegenden Bodenklappe (54) verläuft.

2. Form nach Anspruch 1, wobei die Klappverbindung für die oder jede Bodenklappe (54) durch eine Rillung oder eine andere Schwächungslinie definiert ist.

3. Form nach Anspruch 1 oder 2, wobei die Klappverbindung für die oder jede Bodenklappe (54) durch i) eine Rillung (11, 12, 13, 14, 15, 16, 17, 18), ii) zwei beabstandete Rillungen (11, 12, 13, 14, 15, 16, 17, 18) oder iii) eine alternative Art von Schwächungslinie/n oder eine Kombination davon definiert ist.

4. Form nach Anspruch 3, wobei die zwei beabstandeten Rillungen (11, 12, 13, 14, 15, 16, 17, 18) oder anderen Schwächungslinien an einer oder mehreren Stellen entlang ihrer Länge auf eine einzelne Rillung oder andere Schwächungslinie reduziert sind.

5. Form nach einem der Ansprüche 1 bis 4, wobei der nach innen weisende Rand der Bodenklappe (54) oder jeder Bodenklappe (54) so geformt ist, dass, wenn sich der untere Rand des Wandhauptteils des Seitenwandelements (20) mit nach außen gefalteten Laschen (21) mit dem Bodenhauptteil (2) in Kontakt befindet, die eine oder die mehreren Bodenklappen (54) in eine aktive Position gefaltet sind und die Laschen zwischen den Bodenklappen (54) und dem Bodenhauptteil (2) liegen, der nach innen weisende Rand der Bodenklappe/n (54) im Wesentlichen durchgängig an dem Seitenwandelement (20) anliegt.

6. Form nach einem der Ansprüche 1 bis 5, wobei die mindestens eine klappbare Durchstecklasche neben der Drehachse einen bauchigen Ansatz oder eine Pilzform aufweist.

7. Form nach einem der Ansprüche 1 bis 6, wobei der Boden (1) und die Seitenwandelemente (20) aus Wellpappe hergestellt sind.

8. Form nach Anspruch 7, wobei die Wellpappe eine Außenlage, eine Mittellage und eine Innenlage umfasst, wobei die Innenlage fettdichtes oder pflanzliches Pergamentpapier umfasst.

## Revendications

1. Récipient de cuisson passant au four pliable à plat pouvant être assemblé à partir d'une forme plate non assemblée en une forme assemblée, le récipient comprenant une base plate et au moins un élément de paroi latérale (20), dans lequel :
la base (1) comprend une partie de base principale (2) et un ou plusieurs rabats de base (3, 4, 5, 6) qui sont reliés de manière articulée à la partie de base principale (2),
le ou chaque rabat de base (3, 4, 5, 6) est pliable autour de son articulation entre une première position inactive, dans la forme non assemblée, dans laquelle le rabat est sensiblement coplanaire avec la partie de base principale (2) et une seconde position active, dans la forme assemblée, dans laquelle il recouvre la partie de base principale (2) ;
le ou chaque élément de paroi latérale (20) possède une partie de paroi principale et qui présente le long de son bord inférieur une ou plusieurs languettes (21), chacune desdites languettes (21) étant capable de se replier vers l'extérieur par rapport à la partie de paroi principale ;
de sorte que, lorsque la partie paroi principale de la paroi latérale a son bord inférieur en contact avec la partie base principale (2) avec les languettes (21) repliées vers l'extérieur, et qu'un ou plusieurs rabats de base (3, 4, 5, 6) sont repliés en position active, les languettes (21) sont prises en sandwich entre les rabats de base (3, 4, 5, 6) et la partie de base principale (2), la partie de paroi principale se dressant vers le haut à partir de la partie de base principale (2) ;
un moyen de retenue est prévu pour fixer le ou les rabats de base (3, 4, 5, 6) dans leur position active, de sorte que la partie de base principale (2) et la ou les parties de paroi principale forment une cavité fermée ouverte vers le haut ;
le moyen de retenue comprend au moins une languette traversante de poussée articulée (19) ménagée dans la base qui, lorsqu'elle est en position engagée, s'étend depuis la base à travers une ouverture alignée correspondante ménagée dans le rabat de base sus-jacent (54).

2. Récipient selon la revendication 1, dans lequel la liaison articulée pour le ou chaque rabat de base (54) est définie par un pli ou une autre ligne de faiblesse.

3. Récipient selon la revendication 1 ou la revendication 2, dans lequel la liaison articulée pour le ou chaque rabat de base (54) est définie par un élément ou une combinaison d'éléments parmi i) un pli (11, 12, 13, 14, 15, 16, 17, 18), ii) une paire de plis espacés (11, 12, 13, 14, 15, 16, 17, 18) ou iii) un type alternatif de ligne ou de lignes de faiblesse.

4. Récipient selon la revendication 3, dans lequel la paire de plis espacés (11, 12, 13, 14, 15, 16, 17, 18) ou d'autres lignes de faiblesse est réduite à un simple pli ou une autre ligne de faiblesse en un ou plusieurs points sur sa longueur.

5. Récipient selon l'une quelconque des revendications 1 à 4, dans lequel le bord tourné vers l'intérieur du rabat de base (54) ou de chaque rabat de base (54) est formé de telle sorte que, lorsque la partie de paroi principale de l'élément de paroi latérale (20) a son bord inférieur en contact avec la partie de base principale (2), avec les languettes (21) repliées vers l'extérieur, le ou les rabats de base (54) sont repliés dans une position active, et les languettes sont prises en sandwich entre les rabats de base (54) et la partie de base principale (2), le bord tourné vers l'intérieur du ou des rabats de base (54) forme une butée sensiblement continue avec l'élément de paroi latérale (20).

6. Récipient selon l'une quelconque des revendications 1 à 5, dans lequel l'au moins une languette traversante de poussée articulée a une forme d'épaulement bulbeux ou de champignon adjacente à la charnière.

7. Récipient selon l'une quelconque des revendications 1 à 6, dans lequel la base (1) et les éléments de paroi latérale (20) sont réalisés en carton ondulé.

8. Récipient selon la revendication 7, dans lequel le carton ondulé comprend une couche extérieure, une couche intermédiaire et une couche intérieure, ladite couche intérieure comprenant du papier ingraissable ou du papier sulfurisé végétal.
